# EUROPEAN PATENT SPECIFICATION

(11) **EP 3 236 443 B1**
(45) Date of publication and mention of the grant of the patent: **22.05.2019**
(21) Application number: 17167107.6
(22) Date of filing: 19.04.2017
(51) Int. Cl.: G08B 25/14, G06F 13/28

(54) **INFORMATION PROCESSING DEVICE AND ALARM SYSTEM INCLUDING SAME**
INFORMATIONSVERARBEITUNGSVORRICHTUNG UND ALARMSYSTEM DAMIT
DISPOSITIF DE TRAITEMENT D'INFORMATIONS ET SYSTÈME D'ALARME LE COMPRENANT

(30) Priority: 20.04.2016 JP 2016084812
(43) Date of publication of application: 25.10.2017
(73) Proprietor: Panasonic Intellectual Property Management Co., Ltd., Osaka-shi, Osaka 540-6207 (JP)
(72) Inventor: Nagata, Masahiro, Osaka, 540-6207 (JP); Harada, Kenji, Osaka, 540-6207 (JP); Hoshiba, Keitaro, Osaka, 540-6207 (JP)
(74) Representative: Appelt, Christian W.

(56) References cited:
- US-A1- 2009 259 789
- US-A1- 2014 218 194
- US-B1- 7 561 931

## Description

### Technical Field

The present invention relates to information processing devices and alarm systems including the same, and in particular to an information processing device that communicates with an external storage device, and an alarm system including the same.

### Background Art

In the past, there have been proposed alarm systems including home alarms (see, for example, JP 2010-267183 A [hereinafter referred to as "Document 1"]). The home alarm disclosed in Document 1 includes a sensor (detector), an event detector for detecting abnormality, a reception processor for receiving event signals sent from other home alarms by wireless communication, and an alarm processor for outputting a first abnormal alarm and a second abnormal alarm. The home alarm includes a processor (CPU) known as a one-chip CPU. The processor includes an event detector, a transmission processor, a reception processor, and an alarm processor, which are functions realized by the processor executing programs. The event detector detects an event including detection of abnormality by the sensor and recovery from abnormality which indicates the sensor no longer detects abnormality. The transmission processor sends an event signal to a home alarm to cooperate in response to detection of the event including detection of abnormality by the sensor and recovery from abnormality which indicates the sensor no longer detects abnormality. The reception processor receives an event signal from another home alarm and decodes it. The alarm processor outputs a fire alarm as the first abnormal alarm, and outputs a gas leakage alarm as the second abnormal alarm.

The processor (CPU) disclosed in Document 1 executes programs to realize functions of the event detector, the transmission processor, the reception processor, and the alarm processor. The processor can run two or more of these functions at the same time, but this causes an increase in a load on the processor.
US 2009/0259789 A1 discloses a CPU issuing an external bus access request directly to an external memory interface and issuing a DMA transfer request to a DMAC. In the case where data is randomly accessed at discrete addresses, an external bus access request is issued directly to the external memory interface, and in the case of data block transfer or page swapping as requested by a virtual memory management unit, a DMA transfer request is issued to the DMAC.

### Summary of Invention

In view of the above insufficiency, an object of the present invention would be to propose an information processing device capable of suppressing an increase in a load on a CPU and an alarm system including the same. The invention is defined in the appended claims.

The information processing device according to the present invention includes an internal storage device, a serial communication unit, a D/A converter, and a CPU. The internal storage device holds dummy data. The serial communication unit is configured to obtain, from an external storage device holding reproduction information including multiple pieces of reproduction data, the multiple pieces of reproduction data, by obtaining the dummy data from the internal storage device and sending the dummy data to the external storage device. The D/A converter is configured to obtain the multiple pieces of reproduction data from the serial communication unit and convert a digital signal into an analog signal for each of the multiple pieces of reproduction data. The CPU is configured to control the serial communication unit. The serial communication unit is configured to obtain the dummy data from the internal storage device by direct memory access thereto. The D/A converter is configured to obtain the multiple pieces of reproduction data from the serial communication unit by direct memory access thereto.

The alarm system according to the present invention includes: the aforementioned information processing device; the external storage device; an acoustic device configured to convert the analog signal converted by the D/A converter into a sound to output the reproduction information; and a detector configured to detect a specific event. The CPU is configured to, based on a detection result of the detector, instruct the serial communication unit to send the dummy data to the external storage device to allow the acoustic device to output the reproduction information.

### Brief Description of Drawings

FIG. 1 is a schematic block diagram of the information processing device of Embodiment 1 and the alarm system including the same.
FIG. 2 is a conceptual diagram illustrating operations of the information processing device of the above and the alarm system including the same.
FIG. 3 is a schematic block diagram of the information processing device of Embodiment 2 and the alarm system including the same.

### Description of Embodiments

### (EMBODIMENT 1)

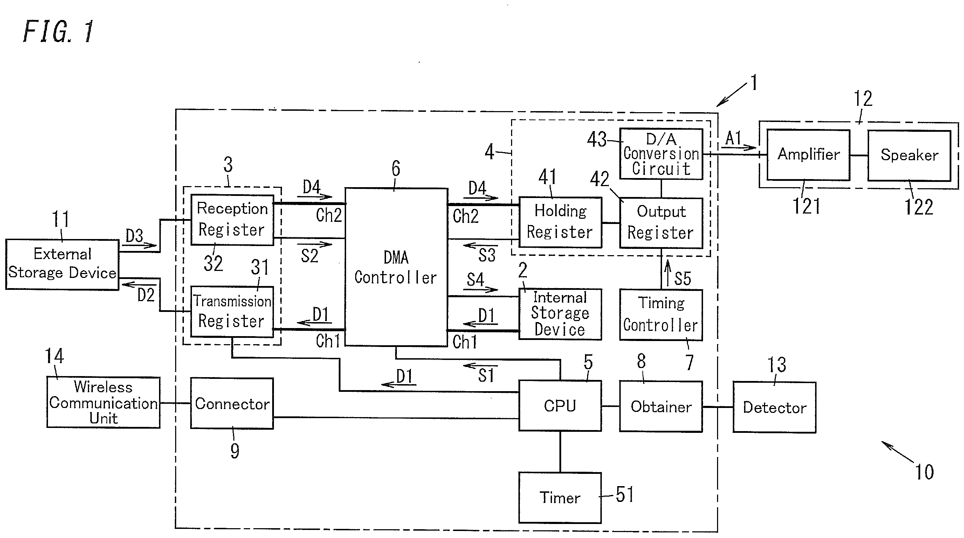

As shown in FIG. 1, the information processing device 1 of Embodiment 1 is included in an alarm system 10. The information processing device 1 reads out data (in the present embodiment, reproduction information for announcing occurrence of a fire) stored in an external storage device 11 and reproduces it (in the present embodiment, outputs it as an analog signal to the acoustic device 12), for example. When detecting occurrence of a fire at a building, the alarm system 10 outputs the reproduction information reproduced by the information processing device 1 as a sound from the acoustic device 12, for example.

The information processing device 1 includes an internal storage device 2, a serial communication unit 3, a D/A converter 4, and a CPU (Central Processing Unit) 5. Further, the information processing device 1 includes a DMA (Direct Memory Access) controller 6, and may further preferably include a timing controller 7, an obtainer 8, a connector 9, and a timer 51.

The alarm system 10 of Embodiment 1 includes the information processing device 1, the external storage device 11, and the acoustic device 12, which are described above. The alarm system 10 further includes a detector 13 and a wireless communication unit 14. The alarm system 10 shown in FIG. 1 includes one information processing device 1, one external storage device 11, one acoustic device 12, one detector 13, and one wireless communication unit 14.

The information processing device 1 may be implemented by a micro controller unit (MCU), for example.

The external storage device 11 includes, for example, a serial bus electrically erasable programmable read-only memory (EEPROM) and a serial peripheral interface (SPI) module. The SPI module of the external storage device 11 is connected to an external interface of the serial communication unit 3 by four signal lines, for example. The external storage device 11 and the serial communication unit 3 perform bidirectional serial communication with each other.

The external storage device 11 holds (stores) reproduction information including multiple pieces of reproduction data D3. Examples of the reproduction information include information including voice data for announcing occurrence of a fire. One example is information including voice data representing a voice "Fire!" For example, the reproduction information includes information including voice data prepared by sampling a voice with a length of 3 seconds at 8 kHz, and is constituted by 24,000 pieces of the reproduction data D3. One piece of the reproduction data D3 is information corresponding to one of samples of the reproduction information. One piece of the reproduction data D3 is constituted by an 8 bits (1 byte) serial data. For example, when the reproduction information is prepared by sampling a voice with a length of 3 seconds at 8 kHz, an amount of data thereof is 24 kilobytes.

The serial communication unit 3 is implemented by an SPI module. The external interface of the serial communication unit 3 is connected to the external storage device 11. The serial communication unit 3 has an internal interface connected to the DMA controller 6. The serial communication unit 3 includes a transmission register 31 and a reception register 32. The transmission register 31 and the reception register 32 are realized by registers of the SPI module, for example.

The internal storage device 2 is implemented by a built-in memory of a microcontroller, for example. The internal storage device 2 holds dummy data D1. The dummy data D1 is prepared as data to be sent from the serial communication unit 3 to the external storage device 11 in order that the serial communication unit 3 obtains the reproduction data D3 from the external storage device 11, and has the same number of bits as the reproduction data D3. Note that, bits constituting the dummy data D1 may have any value, provided that the dummy data D1 has the same number of bits as the reproduction data D3. For example, the dummy data D1 is parallel data of 8 bits (1 byte) where each bit has "0". Alternatively, the dummy data D1 may be parallel data of 8 bits where each bit has "1". Alternatively, the dummy data D1 may be parallel data of 8 bits where each bit has "1" or "0".

The SPI module of the external storage device 11 and the serial communication unit 3 communicate with each other so as to exchange data by one bit at a time. For example, to obtain the reproduction data D3 from the external storage device 11, the serial communication unit 3 needs to send data with the same number of bits as the reproduction data D3 to the SPI module. Thus, to obtain the reproduction data D3, the serial communication unit 3 sends the dummy data D1 with the same number of bits as the reproduction data D3 to the SPI module. Thereby, the serial communication unit 3 can obtain the reproduction data D3 from the external storage device 11. The dummy data D1 is sent to the serial communication unit 3 from either the CPU 5 or the DMA controller 6.

The DMA controller 6 is connected to the serial communication unit 3, the internal storage device 2, and the D/A converter 4. The DMA controller 6 is configured to transfer data on one given place to another given place a given number of times irrespective of the CPU 5. The DMA controller 6 is configured to transfer data from the internal storage device 2 to the serial communication unit 3 irrespective of the CPU 5. Additionally, the DMA controller 6 is configured to transfer data from the serial communication unit 3 to the D/A converter 4 irrespective of the CPU 5.

The timing controller 7 repeats to count clock pulses arising at a constant period, and sends a fourth interrupt signal S5 (interrupt signal) to the output register 42 of the D/A converter 4 each predetermined time (for example, 125 µs) passes from start of counting. In this regard, a frequency of the fourth interrupt signal S5 is 8 kHz.

The D/A converter 4 includes a holding register 41, the output register 42, and a D/A conversion circuit 43. The D/A converter 4 receives, with the holding register 41, reproduction data D4 transferred by the DMA controller 6, and converts the reproduction data D4 into an analog signal A1 with the D/A conversion circuit 43. The analog signal A1 may be an analog voltage signal, for example. Thus, a sound waveform represented by the reproduction information is reproduced as a voltage waveform.

The acoustic device 12 includes an amplifier 121 and a speaker 122, for example. The acoustic device 12 amplifies the analog signal A1 with the amplifier 121 and outputs a sound from the speaker 122. Accordingly, the acoustic device 12 outputs the reproduction information reproduced by the information processing device 1 as a sound to a surrounding area thereof.

The timer 51 has a function of measuring a length of time of the reproduction information reproduced one time by the information processing device 1. The detector 13 detects a specific event. Examples of the specific event may include occurrence of a fire and presence of an intruder. For example, the detector 13 detects occurrence of a fire. The obtainer 8 obtains a detection result of the detector 13 from the detector 13 and outputs it to the CPU 5.

The CPU 5 is a central processing unit of a micro controller, for example. The CPU 5 controls the serial communication unit 3, the DMA controller 6, and the wireless communication unit 14. The CPU 5 controls communication between the serial communication unit 3 and the external storage device 11 before the serial communication unit 3 starts communicating with the DMA controller 6 by DMA. Additionally, before the serial communication unit 3 starts communicating with the DMA controller 6 by DMA, the CPU 5 controls the DMA controller 6 so that the DMA controller 6 performs preparation for the DMA controller 6 to communicate with the serial communication unit 3 by DMA. In other words, the CPU 5 can make the DMA controller 6 be in a ready state (transfer preparatory state). Additionally, the CPU 5 may control start and end of communication operation in wireless communication of the wireless communication unit 14, for example.

The wireless communication unit 14 includes an antenna, and performs wireless communication based on radio waves, for example. The wireless communication unit 14 is connected to the connector 9 of the information processing device 1. The connector 9 may be realized by an SPI module, for example. Connected to the connector 9 is the CPU 5.

Hereinafter, operations of the information processing device 1 and the alarm system 10 are described.

The detector 13 outputs a voltage based on the detection result to the obtainer 8 at a predetermined interval (for example, one second). The obtainer 8 performs A/D conversion on the voltage outputted from the detector 13 and outputs a result to the CPU 5. When the value outputted from the obtainer 8 exceeds a predetermined threshold value a prescribed number of times (for example, three times) continuously, the CPU 5 sends a control signal S1 to the DMA controller 6 to make the DMA controller 6 to be in the ready state (transfer preparatory state).

The control signal S1 includes transfer setting information, transfer number of times information, and transfer trigger information. The transfer setting information includes setting information used by the internal storage device 2 and the transmission register 31 of the serial communication unit 3 to communicate with each other by DMA and the reception register 32 of the serial communication unit 3 and the holding register 41 of the D/A converter 4 to communicate with each other by DMA. Hereinafter, a DMA channel used by the DMA controller 6 to transfer the dummy data D1 from the internal storage device 2 to the transmission register 31 by DMA is referred to as "first channel Ch1". Additionally, a DMA channel used by the DMA controller 6 to transfer the reproduction data D4 from the reception register 32 to the holding register 41 by DMA is referred to as "second channel Ch2".

The transfer number of times information is defined as information designating an upper limit of the number of times which the DMA controller 6 transfers data through each of the first channel Ch1 and the second channel Ch2. The transfer trigger information is defined as information designating triggers for triggering the DMA controller 6 to start data transfer through each of the first channel Ch1 and the second channel Ch2. Based on the transfer trigger information, the DMA controller 6 selects a second interrupt signal S3 as the trigger for the first channel Ch1, and selects a first interrupt signal S2 as the trigger for the second channel Ch2.

The CPU 5 sends the control signal S1 to the DMA controller 6 and subsequently sends the dummy data D1 to the serial communication unit 3.

When the transmission register 31 receives the dummy data D1, the serial communication unit 3 sends the dummy data D1 to the external storage device 11 sequentially by one bit at a time. In other words, the serial communication unit 3 converts the dummy data D1 in a parallel data format, into dummy data D2 in a serial data format, and sends the resultant to the external storage device 11.

The serial communication unit 3 sends, eight times, the dummy data D2 to the external storage device 11 by one bit at a time, thereby receiving one piece of the reproduction data D3 from the external storage device 11. When setting one piece of the reproduction data D3 to the reception register 32, the serial communication unit 3 sends the first interrupt signal S2 to the DMA controller 6.

When receiving the first interrupt signal S2, the DMA controller 6 obtains one piece of the reproduction data D3 set to the reception register 32 from the reception register 32 via the second channel Ch2 as the reproduction data D4 in a parallel data format of 8 bits. The reproduction data D3 is data for a serial communication scheme, and the reproduction data D4 is data for a parallel communication scheme. The reproduction data D3 and D4 are data for mutually different communication schemes, but contain the same information. For this reason, the reproduction data D3 and D4 can be treated as the same reproduction data.

The DMA controller 6 transfers the reproduction data D4 to the holding register 41 of the D/A converter 4 via the second channel Ch2.

The holding register 41 receives and holds the reproduction data D4 transferred by the DMA controller 6 via the second channel Ch2. When receiving the fourth interrupt signal S5 from the timing controller 7, the output register 42 obtains the reproduction data D4 from the holding register 41. The reproduction data D4 obtained by the output register 42 is sent to the D/A conversion circuit 43 and then converted into the analog signal A1. Therefore, the D/A converter 4 outputs the reproduction data D4 as the analog signal A1 to the acoustic device 12. Thus, the acoustic device 12 outputs 125 µs (one divided by 8 kHz) of a sound reproduced from the reproduction information. In other words, each time receiving the analog signal A1, the acoustic device 12 outputs a sound corresponding to one of samples of the reproduction information.

The holding register 41 of the D/A converter 4 outputs the reproduction data D4 to the output register 42 and then sends the second interrupt signal S3 to the DMA controller 6. When receiving the second interrupt signal S3, the DMA controller 6 sends a third interrupt signal S4 to the internal storage device 2. When receiving the third interrupt signal S4, the internal storage device 2 sends the dummy data D1 to the DMA controller 6 through the first channel Ch1. When receiving the dummy data D1, the DMA controller 6 transfers the dummy data D1 to the transmission register 31 of the serial communication unit 3 through the first channel Ch1.

The DMA controller 6 counts the number of times of receiving the second interrupt signal S3, and determines whether the counted value reaches the upper limit of the transfer number of times. For example, in a case of the reproduction information prepared by sampling a voice with a length of 3 seconds at 8 kHz, the upper limit of the transfer number of times is 24,000 times when one time transfer delivers one piece of the reproduction data D4. Until the number of times of receiving the second interrupt signal S3 reaches the upper limit of the transfer number of times, the DMA controller 6 repeats data transfer via the first channel Ch1 and the second channel Ch2. In this case, when one piece of the reproduction data D4 is transferred 24,000 times, the information processing device 1 ends reproduction of the three seconds reproduction information. Thus, the acoustic device 12 can output the reproduction information (voice data) expressing "Fire!" as a sound, for example. When the number of times of receiving the second interrupt signal S3 reaches the upper limit of the transfer number of times, the DMA controller 6 ends setting the first channel Ch1 and the second channel Ch2, and then sends a signal indicating that setting of the first channel Ch1 and the second channel Ch2 is ended, to the CPU 5.

While the DMA controller 6 performs data transfer via the first channel Ch1 and the second channel Ch2, the serial communication unit 3 and the D/A converter 4 continue communication with each other without control of the serial communication unit 3 by the CPU 5. Accordingly, in a period when the reproduction data D4 is transferred from the serial communication unit 3 to the D/A converter 4 by DMA, the CPU 5 does not perform transfer control of the dummy data D1 and the reproduction data D4. This leads to suppressing an increase in a load on the CPU 5. For example, a load on the CPU 5 is smaller in transfer of the reproduction data D4 by DMA than in transfer of the reproduction data D4 by PIO (Programmed I/O) control by the CPU 5. Therefore, an increase in a load on the CPU 5 can be suppressed in transfer of the reproduction data D4. Additionally, suppressing an increase in a load on the CPU 5 can lead to suppressing an increase in a power consumption of the CPU 5.

For example, even in a period when the DMA controller 6 transfers the reproduction data D4 to the second channel Ch2, the CPU 5 can make the wireless communication unit 14 to perform wireless communication and can obtain the detection result of the detector 13 from the obtainer 8.

The timer 51 measures a length of time of the reproduction information reproduced one time by the information processing device 1, and sends the measured length of time to the CPU 5. In a case of reproducing the reproduction information multiple times (for example, twice), the CPU 5 sends the control signal S1 to the DMA controller 6 at an interval equal to or longer than the length of time measured by the timer 51, thereby sending the dummy data D1 to the serial communication unit 3.

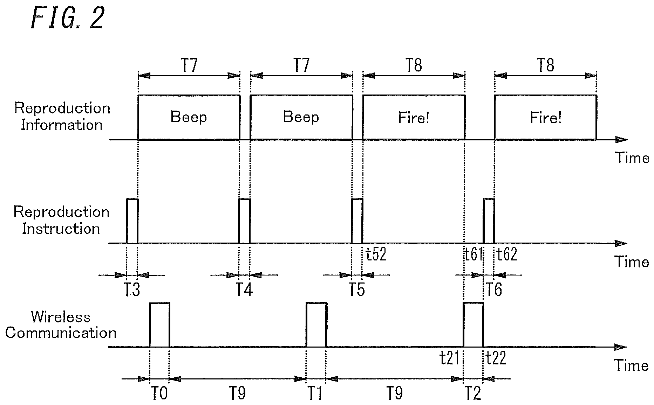

The following explanation referring to FIG. 2 is made to operation of the alarm system 10 where the CPU 5 of the information processing device 1 reproduces the reproduction information multiple times.

Control time periods T0, T1, and T2 (for example, 100 ms) each indicate a time period in which the CPU 5 controls the wireless communication unit 14.

The control time periods T0, T1, and T2 are separated by a predetermined time period T9. The CPU 5 instructs the wireless communication unit 14 to perform wireless communication, each time the predetermined time period T9 passes. When a timing of instructing the wireless communication unit 14 to perform wireless communication and a timing of instructing the acoustic device 12 to output the reproduction information overlap with each other, the CPU 5 prioritizes the wireless communication.

In this regard, the external storage device 11 is assumed to hold the reproduction information including voice data, as well as the reproduction information including alarm (warning sound) data. The reproduction information including an alarm signal includes a sound data prepared by sampling a sound signal representing "Beep-beep" at 8 kHz, for example. In summary, the external storage device 11 holds the reproduction information including voice data and the reproduction information including alarm data separately. For example, in an address space in the external storage device 11, individual addresses of multiple pieces of the reproduction data D3 constituting the reproduction information including voice data are different from individual addresses of multiple pieces of the reproduction data D3 constituting the reproduction information including alarm data.

In an example shown in FIG. 2, the CPU 5 instructs the acoustic device 12 to output the reproduction information including alarm data, a predetermined number of times (for example, twice), when the detector 13 detects a specific event (such as occurrence of a fire and presence of an intruder) one time. In the example shown in FIG. 2, the CPU 5 thereafter instructs the acoustic device 12 to output the reproduction information including voice data, a predetermined number of times (for example, twice). In FIG. 2, "reproduction instruction" represent that the CPU 5 outputs the dummy data D1 to the serial communication unit 3 and outputs the control signal S1 to the DMA controller 6. Output time periods T3 to T6 each represent a time period in which the CPU 5 conducts the reproduction instruction.

When the detector 13 detects the specific event one time, the CPU 5 issues the reproduction instruction for instructing the acoustic device 12 to output the reproduction information including alarm data, at the output time periods T3 and T4. The transmission register 31 of the serial communication unit 3 which has received the dummy data D1 and the DMA controller 6 which has received the control signal S1 cooperate to send the reproduction data D4 of the reproduction information including alarm data to the holding register 41 of the D/A converter 4. In a reproduction time period T7 in which the reproduction information including alarm data is reproduced, the CPU 5 can make the wireless communication unit 14 to perform wireless communication.

The CPU 5 makes the reproduction information including alarm data output the predetermined number of times (twice), and thereafter makes the reproduction information including voice data output the predetermined number of times (twice). The CPU 5 issues the reproduction instruction for outputting the reproduction information including voice data, at the output time period T5. After a lapse of a reproduction time period T8 for the reproduction information including voice data which is reproduced at the first time of the predetermined number of times, the CPU 5 issues the reproduction instruction for outputting the reproduction information including voice data of the second time of the predetermined number of times, at the output time period T6.

In the example shown in FIG. 2, the CPU 5 sets the output time period T6 after the control time period T2. The following description relates to operation in which the CPU 5 determines whether the control time period T2 and the output time period T6 overlap with each other, and if so changes a timing of start of the output time period T6. Note that, in the example shown in FIG. 2, the predetermined number of times is two times. However, the predetermined number of times is not limited to two times but may be an appropriate number of times equal to or more than three times.

A timing t52 represents a timing at which the CPU 5 ends: outputting, to the DMA controller 6, the control signal S1 for instructing the acoustic device 12 to output the reproduction information including voice data of the first time of the predetermined number of times; and outputting the dummy data D1 to the transmission register 31 of the serial communication unit 3. In summary, the end timing t52 is a timing at which the CPU 5 ends issuance of the reproduction instruction. The CPU 5 calculates a start timing t61 and an end timing t62 of the output time period T6 based on the end timing t52 and the reproduction time period T8. For example, the CPU 5 calculates the start timing t61 of the output time period T6 as a timing after a lapse of the reproduction time period T8 from the end timing t52 of the output time period T5. The end timing t62 of the output time period T6 is calculated by adding a length of time of the output time period T6 to the start timing t61. The CPU 5 determines whether the control time period T2 of the wireless communication unit 14 and the output time period T6 overlap with each other. For example, when the start timing t61 or the end timing t62 of the output time period T6 is present between a start timing t21 and an end timing t22 of the control time period T2 of the wireless communication unit 14, the CPU 5 determines that the output time period T6 and the control time period T2 overlap with each other. In this case, the CPU 5 sets the start timing t61 of the output time period T6 later than the end timing t22 of the control time period T2 of the wireless communication unit 14. Accordingly, the CPU 5 can perform control of the wireless communication and issuance of the reproduction instruction (sending the control signal S1 and the dummy data D1) separately.

As described above, the CPU 5 prioritizes the wireless communication over the reproduction information including voice data. Note that, the CPU 5 may prioritize the wireless communication over the reproduction instruction for the reproduction information including alarm data. For example, time necessary for the wireless communication is relatively short time to an extent that it is equal to or shorter than 100 ms. Therefore, if the wireless communication causes a short silent time period between alarms of the first time and the second time of the predetermined number of times, there may be no problem.

As described above, the information processing device 1 of Embodiment 1 includes the internal storage device 2, the serial communication unit 3, the D/A converter 4, and the CPU 5. The internal storage device 2 holds the dummy data D1. The serial communication unit 3 is configured to obtain, from the external storage device 11 holding the reproduction information including the multiple pieces of reproduction data D3, the multiple pieces of reproduction data D3, by obtaining the dummy data D1 from the internal storage device 2 and sending the dummy data D2 to the external storage device 11. The D/A converter 4 is configured to obtain the multiple pieces of reproduction data D4 from the serial communication unit 3 and convert the digital signal into the analog signal A1 for each of the multiple pieces of reproduction data D4. The CPU 5 is configured to control the serial communication unit 3. The serial communication unit 3 is configured to obtain the dummy data D1 from the internal storage device 2 by direct memory access thereto. The D/A converter 4 is configured to obtain the multiple pieces of reproduction data D4 from the serial communication unit 3 by direct memory access thereto.

According to the above configuration, the serial communication unit 3 sends the dummy data D1 obtained from the internal storage device 2 by DMA, to the external storage device 11, thereby obtaining the reproduction data D3 from the external storage device 11. The D/A converter 4 obtains the reproduction data D4 from the serial communication unit 3 by DMA. Once the serial communication unit 3 and the D/A converter 4 are allowed to communicate with each other by DMA, the serial communication unit 3 and the D/A converter 4 can communicate with each other without control of the serial communication unit 3 by the CPU 5. Therefore, the CPU 5 does not perform transfer control of the dummy data D1 and the reproduction data D4 in transfer of the dummy data D1 and the reproduction data D4 by DMA, and thus a load on the CPU 5 is suppressed from increasing. Hence, it is possible to propose the information processing device 1 capable of suppressing an increase in a load on the CPU 5. Therefore, according to the information processing device 1 and the alarm system 10 including the same, an increase in a load on the CPU 5 would be suppressed.

The alarm system 10 of Embodiment 1 includes the aforementioned information processing device 1, the external storage device 11, the acoustic device 12, and the detector 13. The acoustic device 12 is configured to convert the analog signal A1 converted by the D/A converter 4 into a sound to output the reproduction information. The detector 13 is configured to detect a specific event. The CPU 5 is configured to, based on a detection result of the detector 13, instruct the serial communication unit 3 to send the dummy data D2 to the external storage device 11 to allow the acoustic device 12 to output the reproduction information. Therefore, it is possible to propose the alarm system 10 capable of suppressing an increase in a load on the CPU 5.

Preferably, the serial communication unit 3 of the information processing device 1 may be configured to output the first interrupt signal S2 when obtaining one of the multiple pieces of reproduction data D3 from the external storage device 11. The D/A converter 4 may be configured to, when triggered by the first interrupt signal S2, obtain said one of the multiple pieces of reproduction data D3 from the serial communication unit 3 by direct memory access thereto. The D/A converter 4 may be configured to convert the digital signal into the analog signal A1 for the obtained reproduction data D4 and then output the second interrupt signal S3. The serial communication unit 3 may be configured to, when triggered by the second interrupt signal S3, obtain the dummy data D1 from the internal storage device 2 by direct memory access thereto. The serial communication unit 3 may be configured to perform bidirectional communication with the external storage device 11. The serial communication unit 3 may be configured to send the dummy data D2 to the external storage device 11 and in return obtain a different one of the multiple pieces of reproduction data D3 from the external storage device 11. Accordingly, each time the D/A converter 4 converts one piece of the reproduction data D4 into the analog signal A1, the serial communication unit 3 can obtain one piece of the reproduction data D3 from the external storage device 11, thereby obtaining the reproduction data D3 sequentially. Therefore, the D/A converter 4 does not necessarily need a storage device (for example, a buffer memory) for holding multiple pieces of the reproduction data D4 before they are converted into the analog signal A1.

Preferably, the alarm system 10 of Embodiment 1 may further include the wireless communication unit 14. The wireless communication unit 14 may be connected to the CPU 5 and be configured to perform wireless communication with one or more desired devices other than the information processing device 1. The CPU 5 may be configured to: instruct the wireless communication unit 14 to perform wireless communication each time the predetermined time period T9 passes; and to, when the detector 13 detects the specific event one time, instruct the acoustic device 12 to output the reproduction information the predetermined number of times (for example, two times). The CPU 5 may be configured to, when a timing of instructing the acoustic device 12 to output the reproduction information at a second or subsequent time of the predetermined number of times comes during the wireless communication, prioritize the wireless communication and instruct the acoustic device 12 to output the reproduction information of the second or subsequent time after end of the wireless communication.

According to the above configuration, the CPU 5 performs separately an operation of controlling the wireless communication unit 14 to perform wireless communication and an operation of controlling the acoustic device 12 to output the reproduction information. Therefore, compared to a case where the operation of controlling the wireless communication unit 14 to perform wireless communication and the operation of controlling the acoustic device 12 to output the reproduction information are performed at the same time, an increase in a load on the controller can be suppressed. The CPU 5 prioritizes controlling the wireless communication unit 14 to perform wireless communication over controlling the acoustic device 12 to output the reproduction information of the second or subsequent time of the predetermined number of times. Thus, the wireless communication unit 14 is more likely to perform wireless communication each time the predetermined time periods T9 passes. Further, as for the reproduction information, even if there is a silent time period between the reproduction information of the first and second times of the predetermined number of times outputted from the speaker 122 of the acoustic device 12, persons may not feel so strange because they hear the reproduction information outputted from the speaker 122 repeatedly the predetermined number of times.

Note that, the serial communication unit 3 may not be limited to being implemented by the SPI module, but may be implemented by a bidirectional serial communication module such as I²C (I squared C).

A data amount of each of the dummy data D1 and D2 and the reproduction data D3 and D4 may not be limited to 1 byte, but may be set to an appropriate value.

Instead of the CPU 5 sending the dummy data D1 to the serial communication unit 3, the internal storage device 2 may be configured to send the dummy data D1 to the serial communication unit 3 via the first channel Ch1.

The external storage device 11 may hold the aforementioned reproduction information including voice data and reproduction information including alarm data as well as reproduction information including other voice data which may correspond to a voice announcing information such as a location where a fire has detected, abnormality of a concentration of smoke, abnormality of temperature, abnormality of a concentration of gas, and an evacuation site.

The second interrupt signal S3 may be sent from the output register 42 to the DMA controller 6 after the reproduction data D4 of the output register 42 of the D/A converter 4 is converted into the analog signal A1, for example.

The CPU 5 may be configured to output the dummy data D1 designating appropriate reproduction information according to contents received by wireless communication of the wireless communication unit 14 to the serial communication unit 3, and also output the control signal S1 to the DMA controller 6. For example, the reproduction data D4 of the reproduction information according to contents received by wireless communication of the wireless communication unit 14 may be sent from the serial communication unit 3 to the D/A converter 4.

The CPU 5 may control the DMA controller 6 to transfer the reproduction information including alarm data from the external storage device 11 to the D/A converter 4 twice and thereafter transfer the reproduction information including voice data from the external storage device 11 to the D/A converter 4 twice, for example.

The external storage device 11 may hold, for example, voltage waveform information prepared by sampling a voltage waveform in addition to the reproduction information. The D/A converter 4 may convert the reproduction data D4 defining the voltage waveform information into a voltage signal and output it to a measurement device. The measurement device may use a voltage signal outputted from the D/A converter 4 as a voltage for operating a sensor of the measurement device.

Note that, the alarm system 10 may apply to a system for producing a voice or sound for announcing presence of an intruder in response to detection of an intruder, instead of occurrence of a fire. The information processing device 1 may apply to the alarm system 10 with a function of detecting an intruder. In this case, it is sufficient that the reproduction information includes information for announcing detection of an intruder (for example, information including voice data representing a voice "Intruder!") and information for announcing a location where an intruder has been detected, or the like.

The detector 13 may be configured to detect movement of an object to be detected by use of ultrasonic waves, infrared rays, or the like, or may be configured to detect vibration of an object to be detected.

The alarm system 10 may include multiple information processing devices 1, multiple external storage devices 11, multiple acoustic devices 12, multiple detectors 13, and multiple wireless communication units 14. For example, the information processing device 1 may communicate, by wireless communication performed by the wireless communication unit 14 connected to the information processing device 1, with another information processing device 1.

Note that, the CPU 5 may be configured to prioritize outputting the dummy data D1 and the control signal S1 over communication control of the wireless communication unit 14 when the detector 13 detects abnormality before the control time period T1 of the wireless communication unit 14 in the alarm system 10. For example, the CPU 5 prioritizes instructing the acoustic device 12 to output the reproduction information of the first time, over wireless communication of the wireless communication unit 14. With this configuration, when obtaining from the obtainer 8 information that the detector 13 has detected abnormality, the CPU 5 can instruct the acoustic device 12 to output the reproduction information of the first time despite the control time period T1 of the wireless communication unit 14.

The CPU 5 may be configured to perform three or more times the reproduction instruction of instructing the acoustic device 12 to output the reproduction information including voice data. Further, the CPU 5 may prioritize the wireless communication by the wireless communication unit 14 over the reproduction instruction of the third or subsequent time.

The detector 13 may include one or more appropriate sensors for measuring a concentration of smoke and a concentration of gas in addition to a temperature. In this case, the detector 13 may detect occurrence of a fire with reference to a concentration of smoke and a concentration of gas.

### (EMBODIMENT 2)

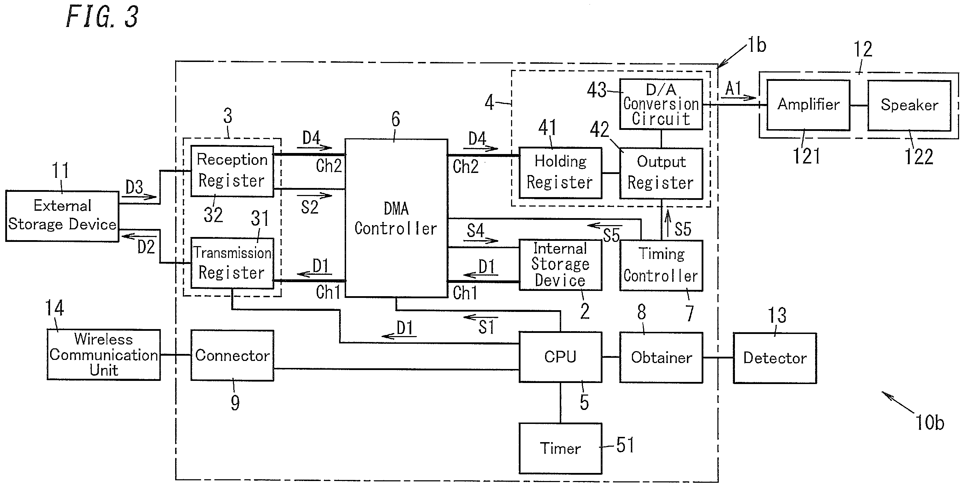

The following description referring to FIG. 3 is made to the information processing device 1b of Embodiment 2 and the alarm system 10b including the same. The information processing device 1b of Embodiment 2 is different from the information processing device 1 of Embodiment 1 in configurations of the DMA controller 6, the D/A converter 4, and the timing controller 7. Note that, the information processing device 1b and the alarm system 10b include component same as or comparable to those of the information processing device 1 and the alarm system 10 of Embodiment 1, and such components are designated by same reference signs as those in Embodiment 1 to avoid redundant explanations.

The information processing device 1b of Embodiment 2 includes the timing controller 7. The timing controller 7 counts clock pulses arising at a constant period. The timing controller 7 sends the fourth interrupt signal S5 to the output register 42 of the D/A converter 4 and the DMA controller 6 each time a constant time period (for example, 125 µs) passes from start of counting.

The DMA controller 6 receives the fourth interrupt signal S5 from the timing controller 7 instead of the second interrupt signal S3 in the information processing device 1 of Embodiment 1. When triggered by the fourth interrupt signal S5, the DMA controller 6 sends the third interrupt signal S4 to the internal storage device 2.

The function of sending the second interrupt signal S3 to the DMA controller 6 is omitted from the D/A converter 4 of the information processing device 1b of Embodiment 2.

Note that, explanations of other configurations and operations are deemed unnecessary because operations of the DMA controller 6 in the information processing device 1 of Embodiment 1 may apply mutatis mutandis with "the second interrupt signal S3" being replaced with "the fourth interrupt signal S5".

As described above, the information processing device 1b of Embodiment 2 includes the timing controller 7. The timing controller 7 is configured to output the fourth interrupt signal S5 (interrupt signal) each time the constant time period passes. The serial communication unit 3 is configured to, when triggered by the fourth interrupt signal S5 (interrupt signal), obtain the dummy data D1 from the internal storage device 2 by direct memory access thereto, and perform bidirectional communication with the external storage device 11 to send the dummy data D2 to the external storage device 11 and in return obtain one of the multiple pieces of reproduction data D3 from the external storage device 11. The D/A converter 4 is configured to obtain said one of the multiple pieces of reproduction data D4 from the serial communication unit 3 by direct memory access thereto.

According to the above configuration, the DMA controller 6 can transfer one piece of the dummy data D1 from the internal storage device 2 to the serial communication unit 3 each time a constant time period (for example, 125 µs) passes. Therefore, each timing at which the reproduction data D4 is transferred from the serial communication unit 3 to the D/A converter 4 can easily stabilize. Additionally, there may be no need to configure the D/A converter 4 to send the second interrupt signal S3. Hence, this may lead to a decrease in a production cost of the information processing device 1b.

Note that, the DMA controller 6 and the timing controller 7 in the information processing device 1b of Embodiment 2 are applicable to Embodiment 1.

### Reference Signs List

- 1, 1b: Information Processing Device
- 2: Internal Storage Device
- 3: Serial Communication Unit
- 4: D/A Conversion Unit
- 5: CPU
- 7: Timing Controller
- 8: Obtainer
- 10, 10b: Alarm System
- 11: External Storage Device
- 12: Acoustic Device
- 13: Detector
- 14: Wireless Communication Unit
- A1: Analog Signal
- D1, D2: Dummy Data
- D3, D4: Reproduction Data
- S2: First Interrupt Signal
- S3: Second Interrupt Signal
- S5: Fourth Interrupt Signal (Interrupt Signal)
- T9: Predetermined Time Period

## Claims

1. An information processing device (1) comprising:
an internal storage device (2) holding dummy data (D1);
a serial communication unit (3) configured to obtain, from an external storage device (11) holding reproduction information including multiple pieces of reproduction data (D3), the multiple pieces of reproduction data (D3), by obtaining the dummy data (D1) from the internal storage device (2) and sending the dummy data (D2) to the external storage device (11);
a D/A converter (4) configured to obtain the multiple pieces of reproduction data (D4) from the serial communication unit (3) and convert a digital signal into an analog signal (Al) for each of the multiple pieces of reproduction data (D4);
a CPU (5) configured to control the serial communication unit (3); and
a DMA controller (6) connected to the serial communication unit (3), the internal storage device (2), and the D/A converter (4),
the serial communication unit (3) being configured to obtain the dummy data (D1) from the internal storage device (2) by direct memory access thereto, wherein the DMA controller (6) is configured to transfer the dummy data (D1) to the serial communication unit (3) from the internal storage device (2), and
the D/A converter (4) being configured to obtain the multiple pieces of reproduction data (D4) from the serial communication unit (3) by direct memory access thereto, wherein the DMA controller (6) is configured to transfer the reproduction data (D4) to the D/A converter (4) from the serial communication unit (3),
the dummy data (D1) having the same number of bits as the reproduction data (D3), and
the serial communication unit (3) being configured to communicate with the external storage device (11) so as to exchange data by one bit at a time.

2. The information processing device (1) of claim 1, wherein:
the serial communication unit (3) is configured to output a first interrupt signal (S2) when obtaining one of the multiple pieces of reproduction data (D3) from the external storage device (11);
the D/A converter (4) is configured to, when triggered by the first interrupt signal (S2), obtain said one of the multiple pieces of reproduction data (D3) from the serial communication unit (3) by direct memory access thereto, and convert a digital signal into an analog signal (Al) for the obtained reproduction data (D4) and then output a second interrupt signal (S3); and
the serial communication unit (3) is configured to, when triggered by the second interrupt signal (S3), obtain the dummy data (D1) from the internal storage device (2) by direct memory access thereto and perform bidirectional communication with the external storage device (11) to send the dummy data (D2) to the external storage device (11) and in return obtain a different one of the multiple pieces of reproduction data (D3) from the external storage device (11).

3. The information processing device (1b) of claim 1, further comprising a timing controller (7) configured to output a fourth interrupt signal (S5) each time a constant time period passes,
the serial communication unit (3) being configured to, when triggered by the fourth interrupt signal (S5), obtain the dummy data (D1) from the internal storage device (2) by direct memory access thereto and perform bidirectional communication with the external storage device (11) to send the dummy data (D2) to the external storage device (11) and in return obtain one of the multiple pieces of reproduction data (D3) from the external storage device (11), and
the D/A converter (4) being configured to obtain said one of the multiple pieces of reproduction data (D4) from the serial communication unit (3) by direct memory access thereto.

4. An alarm system (10) comprising:
the information processing device (1) of any one of claims 1 to 3;
the external storage device (11);
an acoustic device (12) configured to convert the analog signal (A1) converted by the D/A converter (4) into a sound to output the reproduction information; and
a detector (13) configured to detect a specific event,
the CPU (5) being configured to, based on a detection result of the detector (13), instruct the serial communication unit (3) to send the dummy data (D2) to the external storage device (11) to allow the acoustic device (12) to output the reproduction information.

5. The alarm system (10) of claim 4, further comprising a wireless communication unit (14) connected to the CPU (5) and configured to perform wireless communication,
the CPU (5) being configured:
to instruct the wireless communication unit (14) to perform wireless communication each time a predetermined time period (T9) passes;
to, when the detector (13) detects the specific event one time, instruct the acoustic device (12) to output the reproduction information a predetermined number of times; and
to, when a timing of instructing the acoustic device (12) to output the reproduction information at a second or subsequent time of the predetermined number of times comes during the wireless communication, prioritize the wireless communication and instruct the acoustic device (12) to output the reproduction information of the second or subsequent time after end of the wireless communication.

## Patentansprüche

1. Informationsverarbeitungs-Vorrichtung (1), umfassend:
eine interne Speichervorrichtung (2), die Dummydaten (D1) vorhält;
eine serielle Kommunikationseinheit (3), die konfiguriert ist, um von einer externen Speichereinheit (11), die multiple Teile von Reproduktionsdaten (D3) aufweisende Reproduktionsinformationen aufweist, die multiplen Teile von Reproduktionsdaten (D3) zu erhalten, indem sie die Dummydaten (D1) von der internen Speichervorrichtung (2) erhält und die Dummydaten (D2) an die externe Speichervorrichtung (11) sendet;
einen D/A-Wandler (4), der konfiguriert ist, um die multiplen Teile von Reproduktionsdaten (D4) von der seriellen Kommunikationseinheit (3) zu erhalten und für jedes der multiplen Teile von Reproduktionsdaten (D4) ein digitales Signal in ein analoges Signal (A1) umzuwandeln;
eine CPU (5), die konfiguriert ist, um die serielle Kommunikationseinheit (3) zu steuern; und
einen DMA-Kontroller (6), der an die serielle Kommunikationseinheit (3), die interne Speichervorrichtung (2) und den D/A-Wandler (4) angeschlossen ist,
wobei die serielle Kommunikationseinheit (3) konfiguriert ist, um die Dummydaten (D1) von der internen Speichervorrichtung (2) durch direkten Speicherzugriff darauf zu erhalten, wobei der DMA-Kontroller (6) konfiguriert ist, um die Dummydaten (D1) von der internen Speichervorrichtung (2) auf die serielle Kommunikationseinheit (3) zu übertragen und
der D/A-Wandler (4) konfiguriert ist, um die multiplen Teile von Reproduktionsdaten (DA) von der seriellen Kommunikationseinheit (3) durch direkten Speicherzugriff darauf zu erhalten, wobei der DMA-Kontroller (6) konfiguriert ist, um die Reproduktionsdaten (D4) von der seriellen Kommunikationseinheit (3) auf den D/A-Wandler (4) zu übertragen,
wobei die Dummydaten (D1) dieselbe Anzahl von Bits wie die Reproduktionsdaten (D3) aufweisen, und
die serielle Kommunikationseinheit (3) konfiguriert ist, um mit der externen Speichervorrichtung (11) zu kommunizieren, um Daten per einem Bit gleichzeitig auszutauschen.

2. Informationsverarbeitungs-Vorrichtung (1) nach Anspruch 1, wobei:
die serielle Kommunikationseinheit (3) konfiguriert ist, um ein erstes Unterbrechungssignal (S2) auszugeben, wenn eines der multiplen Teile von Reproduktionsdaten (D3) von der externen Speichervorrichtung (11) erhalten wird;
der D/A-Wandler (4) konfiguriert ist, um das genannte eine von multiplen Teilen von Reproduktionsdaten (D3) von der seriellen Kommunikationseinheit (3) durch direkten Speicherzugriff darauf zu erhalten, wenn er durch das erste Unterbrechungssignal (S2) ausgelöst ist, und für die erhaltenen Reproduktionsdaten (D4) ein digitales Signal in ein analoges Signal (A1) umzuwandeln und dann ein zweites Unterbrechungssignal (S3) auszugeben; und
die serielle Kommunikationseinheit (3) konfiguriert ist, um die Dummydaten (D1) von der internen Speichervorrichtung (2) durch direkten Speicherzugriff darauf zu erhalten, wenn sie durch das zweite Unterbrechungssignal (S3) ausgelöst ist, und eine bidirektionale Kommunikation mit der externen Speichervorrichtung (11) durchzuführen, um die Dummydaten (D2) an die externe Speichervorrichtung (11) zu senden und im Gegenzug ein unterschiedliches von den multiplen Teilen von Reproduktionsdaten (D3) von der externen Speichervorrichtung (11) zu erhalten.

3. Informationsverarbeitungs-Vorrichtung (1b) nach Anspruch 1, weiterhin umfassend einen Timing-Kontroller (7), der konfiguriert ist, um jedes Mal, wenn eine konstante Zeitperiode abläuft, ein viertes Unterbrechungssignal (S5) auszugeben,
wobei die serielle Kommunikationseinheit (3) konfiguriert ist, um die Dummydaten (D1) von der internen Speichervorrichtung (2) durch direkten Speicherzugriff darauf zu erhalten, wenn sie durch das vierte Unterbrechungssignal (S5) ausgelöst ist, und eine bidirektionale Kommunikation mit der externen Speichervorrichtung (11) durchzuführen, um die Dummydaten (D2) an die externe Speichervorrichtung (11) zu senden und im Gegenzug eines der multiplen Teile von Reproduktionsdaten (D3) von der externen Speichervorrichtung (11) zu erhalten und
der D/A-Wandler (4) konfiguriert ist, um das genannte eine der multiplen Teile von Reproduktionsdaten (D4) von der seriellen Kommunikationseinheit (3) durch direkten Speicherzugriff darauf zu erhalten.

4. Alarmsystem (10), umfassend:
die Informationsverarbeitungs-Vorrichtung (1) nach einem der Ansprüche 1 bis 3;
die externe Speichervorrichtung (11);
eine akustische Vorrichtung (12), die konfiguriert ist, um das analoge Signal (A1), das vom D/A-Wandler (4) umgewandelt wurde, in einen Ton umzuwandeln, um die Reproduktionsinformationen auszugeben; und
einen Detektor (13), der konfiguriert ist, um ein spezifisches Ereignis zu detektieren,
wobei die CPU (5) konfiguriert ist, um basierend auf einem Detektionsergebnis des Detektors (13), die serielle Kommunikationseinheit (3) anzuweisen, um die Dummydaten (D2) an die externe Speichervorrichtung (11) zu senden, um der akustischen Vorrichtung (12) zu erlauben, die Reproduktionsinformationen auszugeben.

5. Alarmsystem (10) nach Anspruch 4, weiterhin umfassend eine drahtlose Kommunikationseinheit (14), die an die CPU (5) angeschlossen und konfiguriert ist, um eine drahtlose Kommunikation durchzuführen,
wobei die CPU (5) konfiguriert ist:
um die drahtlose Kommunikationseinheit (14) anzuweisen, um jedes Mal, wenn eine vorbestimmte Zeitperiode (T9) abläuft, eine drahtlose Kommunikation durchzuführen;
um, wenn der Detektor (13) die spezifische einmalige Ereigniszeit detektiert, die akustische Vorrichtung (12) anweist, die Reproduktionsinformation eine vorbestimmte Anzahl von Malen auszugeben; und
um, wenn ein Timing einer Anweisung der akustischen Vorrichtung (12) zum Ausgeben der Reproduktionsinformation ein zweites oder anschließendes Mal der vorbestimmten Anzahl von Malen während der drahtlosen Kommunikation erfolgt, der drahtlosen Kommunikation den Vorrang einzuräumen und die akustische Vorrichtung (12) anzuweisen, die Reproduktionsinformation des zweiten oder anschließenden Mals nach dem Ende der drahtlosen Kommunikation auszugeben.

## Revendications

1. Dispositif de traitement d'informations (1) comprenant :
un dispositif de stockage interne (2) contenant des données factices (D1) ;
une unité de communication série (3) configurée de manière à obtenir, à partir d'un dispositif de stockage externe (11) conservant des informations de reproduction incluant de multiples éléments de données de reproduction (D3), les multiples éléments de données de reproduction (D3), en obtenant les données factices (D1) à partir du dispositif de stockage interne (2) et en envoyant les données factices (D2) au dispositif de stockage externe (11) ;
un convertisseur numérique-analogique, D/A, (4) configuré de manière à obtenir les multiples éléments de données de reproduction (D4) à partir de l'unité de communication série (3) et à convertir un signal numérique en un signal analogique (Al) pour chacun des multiples éléments de données de reproduction (D4) ;
une unité centrale de traitement, CPU, (5) configurée de manière à commander l'unité de communication série (3) ; et
un contrôleur d'accès direct à la mémoire, DMA, (6) connecté à l'unité de communication série (3), au dispositif de stockage interne (2), et au convertisseur numérique-analogique (4) ;
l'unité de communication série (3) étant configurée de manière à obtenir les données factices (D1) à partir du dispositif de stockage interne (2) par le biais d'un accès direct à la mémoire de celui-ci, dans lequel le contrôleur d'accès DMA (6) est configuré de manière à transférer les données factices (D1) vers l'unité de communication série (3), depuis le dispositif de stockage interne (2) ; et
le convertisseur numérique-analogique (4) étant configuré de manière à obtenir les multiples éléments de données de reproduction (D4) à partir de l'unité de communication série (3) par le biais d'un accès direct à la mémoire de celle-ci, dans lequel le contrôleur d'accès DMA (6) est configuré de manière à transférer les données de reproduction (D4) au convertisseur numérique-analogique (4), à partir de l'unité de communication série (3) ;
les données factices (D1) présentant le même nombre de bits que les données de reproduction (D3) ; et
l'unité de communication série (3) étant configurée de manière à communiquer avec le dispositif de stockage externe (11) de manière à échanger des données, bit par bit.

2. Dispositif de traitement d'informations (1) selon la revendication 1, dans lequel :
l'unité de communication série (3) est configurée de manière à fournir en sortie un premier signal d'interruption (S2) dans le cadre de l'obtention de l'un des multiples éléments de données de reproduction (D3) à partir du dispositif de stockage externe (11) ;
le convertisseur numérique-analogique (4) est configuré de manière à, lorsqu'il est déclenché par le premier signal d'interruption (S2), obtenir ledit un des multiples éléments de données de reproduction (D3) à partir de l'unité de communication série (3), par un accès direct à la mémoire, et à convertir un signal numérique en un signal analogique (Al) pour les données de reproduction obtenues (D4), et ensuite à fournir en sortie un deuxième signal d'interruption (S3) ; et
l'unité de communication série (3) est configurée de manière à, lorsqu'elle est déclenchée par le deuxième signal d'interruption (S3), obtenir les données factices (D1) à partir du dispositif de stockage interne (2), par le biais d'un accès direct à la mémoire de celui-ci, et à mettre en oeuvre une communication bidirectionnelle avec le dispositif de stockage externe (11) en vue d'envoyer les données factices (D2) au dispositif de stockage externe (11) et, en retour, d'obtenir un élément différent, parmi les multiples éléments des données de reproduction (D3), à partir du dispositif de stockage externe (11).

3. Dispositif de traitement d'informations (1b) selon la revendication 1, comprenant en outre un contrôleur de temporisation (7) configuré de manière à fournir en sortie un quatrième signal d'interruption (S5) à chaque fois qu'une période de temps constante s'écoule ;
l'unité de communication série (3) étant configurée de manière à, lorsqu'elle est déclenchée par le quatrième signal d'interruption (S5), obtenir les données factices (D1) à partir du dispositif de stockage interne (2), par le biais d'un accès direct à la mémoire de celui-ci, et à mettre en oeuvre une communication bidirectionnelle avec le dispositif de stockage externe (11) en vue d'envoyer les données factices (D2) au dispositif de stockage externe (11), et, en retour, d'obtenir l'un des multiples éléments de données de reproduction (D3) à partir du dispositif de stockage externe (11) ; et
le convertisseur numérique-analogique (4) étant configuré de manière à obtenir ledit un des multiples éléments de données de reproduction (D4) à partir de l'unité de communication série (3) par le biais d'un accès direct à la mémoire de celle-ci.

4. Système d'alarme (10) comprenant :
le dispositif de traitement d'informations (1) selon l'une quelconque des revendications 1 à 3 ;
le dispositif de stockage externe (11) ;
un dispositif acoustique (12) configuré de manière à convertir le signal analogique (Al), converti par le convertisseur numérique-analogique (4), en un son, en vue de fournir en sortie les informations de reproduction ; et
un détecteur (13) configuré de manière à détecter un événement spécifique ;
l'unité centrale de traitement, CPU, (5) étant configurée de manière à, sur la base d'un résultat de détection du détecteur (13), donner instruction à l'unité de communication série (3) d'envoyer les données factices (D2) au dispositif de stockage externe (11), en vue de permettre au dispositif acoustique (12) de fournir en sortie les informations de reproduction.

5. Système d'alarme (10) selon la revendication 4, comprenant en outre une unité de communication sans fil (14) connectée à l'unité centrale de traitement, CPU, (5), et configurée de manière à mettre en oeuvre une communication sans fil,
l'unité centrale de traitement, CPU, (5) étant configurée de manière à :
donner instruction à l'unité de communication sans fil (14) de mettre en oeuvre une communication sans fil à chaque fois qu'une période de temps prédéterminée (T9) s'écoule ;
lorsque le détecteur (13) détecte l'événement spécifique une seule fois, donner instruction au dispositif acoustique (12) de fournir en sortie les informations de reproduction, un nombre prédéterminé de fois ; et
lorsqu'une temporisation de l'instruction donnée, au dispositif acoustique (12), de fournir en sortie les informations de reproduction à un second instant, ou à un instant subséquent du nombre prédéterminé de fois, survient au cours de la communication sans fil, donner la priorité à la communication sans fil, et donner instruction au dispositif acoustique (12) de fournir en sortie les informations de reproduction du second instant ou de l'instant subséquent, à l'issue de la communication sans fil.
